# EUROPEAN PATENT APPLICATION

(11) **EP 2 302 813 A1**
(43) Date of publication of application: **30.03.2011**
(21) Application number: 09252286.1
(22) Date of filing: 28.09.2009
(51) Int. Cl.: H04B 1/10, H04B 1/52

(54) **Harmonic cancelling**

(71) Applicant: NXP B.V., 5656 AG Eindhoven (NL)
(72) Inventor: Breems, Lucien Johannes NXP SEMICONDUCTORS, Surrey, RH1 1DL (GB)
(74) Representative: Williamson, Paul Lewis

(57) **Abstract**

A method of reducing harmonic distortion In a digitised radiofrequency input signal (420), the method comprising: multiplying the input signal (420) by itself to produce a product signal (522); mixing the input signal (420) and the product signal (522) with a baseband frequency signal (LO) to produce first and second intermediate frequency signals (525,526; 529,530); and subtracting a scaled version of the second intermediate frequency signal (526;530) from the first intermediate frequency signal (525;529) to produce an output signal (534).

## Description

The invention relates to harmonic cancellation in RF signals, and in particular to digital signal processing for reducing harmonic distortions that may for example result from amplifier or ADC non-linearities, or from other sources of non-linearities.

In a radio receiver system the dynamic range of the system is an important parameter because it determines the sensitivity of the receiver. However, the linearity of a radio receiver system is also an important requirement because spurious components generated by non-linearity may degrade the performance for certain RF frequencies. Moving from narrow band receiver systems to wideband receiver systems further increases the demands on linearity.

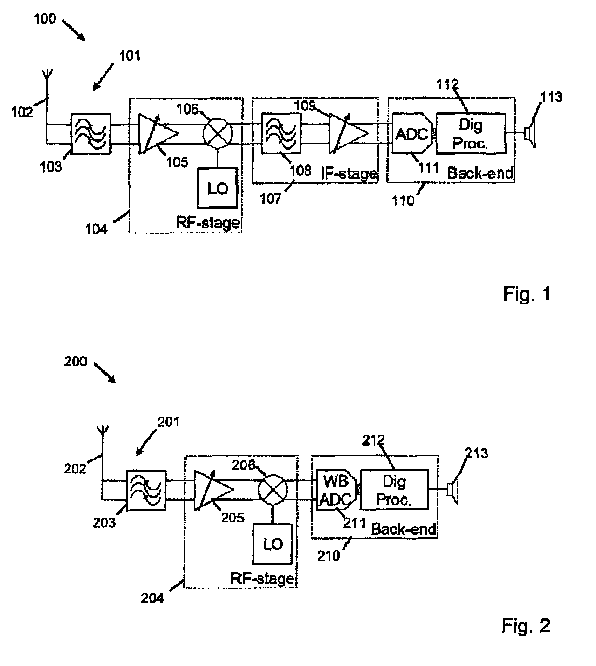

A conventional single channel receiver system 10D is shown in figure 1. The receiver system 100 comprises an input stage 101 having an aerial 102 and an input stage bandpass filter 103. An RF stage 104, comprising a low noise amplifier (LNA) 105 and frequency mixer 106, takes a filtered input signal from the input bandpass filter 103 and provides an intermediate frequency (IF) signal to an IF stage 107. The IF stage 107 comprises an IF bandpass filter 108 and an IF amplifier 109. An output signal of the IF stage is provided to a 'back-end' digital module 110, comprising an analog to digital converter (ADC) 111 and a digital processing module 112. An output signal from the digital module 110 is then for example provided to a loudspeaker 113.

In the kind of receiver system 100 shown in figure 1, non-ineariles mainly limit the third order Intermodulation distortion (IM3) performance in FM (frequency modulation). For AM (amplitude modulation), non-linearity also limits the IM3 performance, and particular problems may arise due to harmonics of a strong interference signal. The main contribution in a single channel receiver to non-lineanties is the front-end LNA 105. Selectivity applied in the IF stage 107 by the IF bandpass filter 108 may be able to filter out contributions from interference that lie well outside the bandwidth of interest, but not those that lie within the bandwidth of interest.

A wide-band receiver 200 is shown in Figure 2, in which the full bandwidth of an input signal from the input stage 201 is amplified and mixed by the RF stage 204. The resulting IF signal is fed directly to a digital stage 210 without being further bandwidth limited. The ADC 211 converts the full IF bandwidth to the digital domain, and a channel is selected from this bandwidth digitally by the digital processing module 212. For AM signals, the input signal is not mixed but is instead directly converted to the digital domain after the front-end LNA, i.e. without any channel selectivity.

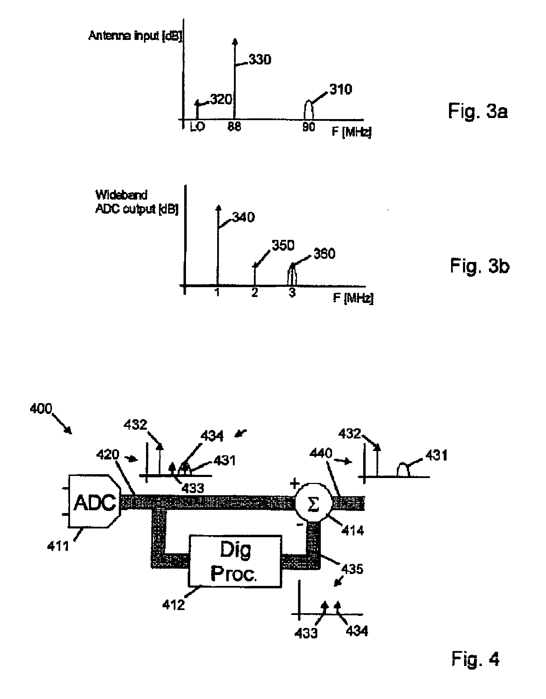

Any strong signals which are present in the IF signal bandwidth are now not filtered since the IF-stage is removed. This means that the strong signals are fully applied to the wide band ADC 211, which may generate harmonic components at a wanted channel. An important difference between the single channel receiver 100 of figure 1 and the wideband receiver 200 of figure 2 is the impact of a strong unwanted channel. In the single channel receiver 100 such interference is filtered by the channel filter 108 in the IF-stage, reducing its impact significantly. However in the wideband system 200 the strong channel is applied unfiltered to the wideband ADC 211. Since the ADC 211 is not infinitely linear, this strong signal can produce spurious components at its harmonics. At these harmonics the reception quality can therefore be significantly reduced. An illustrative example of this is given in the schematic frequency spectra of figures 3a and 3b.

The received FM band 310 is mixed with a local oscillator (LO) signal 320 at 87MHz (figure 3a). This means that the strong unwanted signal 330 at 88MHz mixes to a signal 340 at 1MHz (figure 3b). When the ADC receives this 1MHz signal, and the ADC suffers from 2nd and 3rd order harmonic distortion, spurious tones 350, 360 are generated at 2MHz and 3MHz. When the wanted signal 310 is located at 90MHz, this is mixed by the mixer to 3MHz, exactly falling together with the 3rd order harmonic 360 resulting from distortion created by the ADC.

The requirements on linearity for the front-end (i.e. the input stage 201 and RF stage 202 of figure 2) and the ADC 211 in order to avoid this problem are particularly demanding. A significant amount of power and/or area would need to be devoted to these components in order to achieve these linearity requirements, which places cost and size limits on implementations of such receivers.

It is an object of the invention to address one or more of the above mentioned problems.

According to a first aspect of the invention there is provided a method of reducing harmonic distortion in a digitised radiofrequency input signal, the method comprising:
multiplying the input signal by itself to produce a product signal;
mixing the input signal and the product signal with a baseband frequency signal to produce first and second intermediate frequency signals; and
subtracting a scaled version of the second intermediate frequency signal from the first intermediate frequency signal to produce an output signal.

The input signal is preferably multiplied by itself a number of times corresponding to the order of harmonic distortion to be reduced. In a preferred embodiment, the input signal is multiplied by itself twice to reduce third order harmonic distortion in the digitised radiofrequency input signal.

The second intermediate frequency signal is preferably scaled via an amplifier having an adjustable gain.

The first and second intermediate frequency signals are preferably filtered with respective filter modules.

The method may further comprise the steps of:
calculating a correlation between the output signal and the product signal; and
adjusting the gain of the amplifier until the correlation is minimised.

According to a second aspect of the invention there is provided a digital signal processing apparatus for reducing harmonic distortion in a digitised radiofrequency input signal, the apparatus comprising:
an analog to digital converter configured to convert an input radiofrequency signal into a digitised signal;
a first mixer module configured to mix the digitised signal with a mixing signal to provide a first intermediate signal;
a signal multiplier module configured to multiply the digitised signal by itself to provide a product signal;
a second mixer module configured to mix the product signal with the mixing signal to provide a second intermediate signal;
first and second filter modules configured to respectively receive the first and second intermediate frequency signals and to provide respective first and second filtered intermediate frequency signals;
a scaling module configured to scale the second filtered intermediate signal to provide a scaled version of the second intermediate frequency signal; and
a subtractor module configured to subtract the scaled version of the second intermediate signal from the first filtered intermediate frequency signal to provide an output signal.

The scaling module is preferably an amplifier having an adjustable gain.

The digital signal processing apparatus may also comprise a correlator module configured to calculate a correlation between the output signal and the product signal and to provide a control signal to the amplifier to reduce the correlation.

An advantage of the invention is that limitations in performance caused by analog components can be reduced or eliminated by digital enhancement techniques, thereby reducing the need for tight tolerances on analog components.

A further advantage of the invention is that, since digital blocks are highly scalable with newer technologies, the method of reducing harmonic distortion becomes more efficient for smaller feature sizes.

A further advantage is that, since harmonics of the whole system are improved, a potential increase In performance for existing narrow-band receivers may also be achieved.

The above aspects of the invention are described by way of example in further detail below with reference to the accompanying drawings, in which:
figure 1 is a schematic block diagram of a conventional single channel receiver;
figure 2 is a schematic block diagram of a conventional wide-band digital receiver;
figures 3a and 3b are schematic frequency spectra of input signals and resulting intermediate mixed signals;
figure 4 is a schematic generalised block diagram of a digital circuit for reducing ADC non-linearity; and
figure 5 is a schematic block diagram of an exemplary digital processing circuit for reducing ADC non-linearity.

The receivers 100, 200 of figures 1 and 2, and the frequency spectra of figures 3a and 3b have already been described above in the background to the invention.

A wideband receiver converts and processes a defined frequency bandwidth into the digital domain. The bandwidth can comprise signals that may be frequency or amplitude modulated. The frequency bandwidth will contain at least one channel or signal band, the information from which can be used to estimate and cancel harmonic components that originate from blocks in the system that process these signals and suffer from some degree of non-linear behaviour. Because the content of the entire bandwidth is provided in the digital domain, more advanced correction methods become possible. An example of such a correction method is illustrated in general by the digital signal processing apparatus 400 shown in figure 4. An output digital signal 420 from ADC 411 is provided to a digital processor 412. The output digital signal 420 comprises the wanted signal 431 and a strong unwanted signal 432, together with interference signals 433, 434 resulting from second and third harmonic distortion in the ADC output The digital processor 412 extracts the second and third harmonic components 433, 434 from the output signal 420 and provides these in the form of a correction signal 435 to a subtraction module 414, which subtracts these harmonic components from the output signal 420 and provides a resulting signal 440 that contains only the strong unwanted signal 432 and the wanted channel 431, without further disturbances.

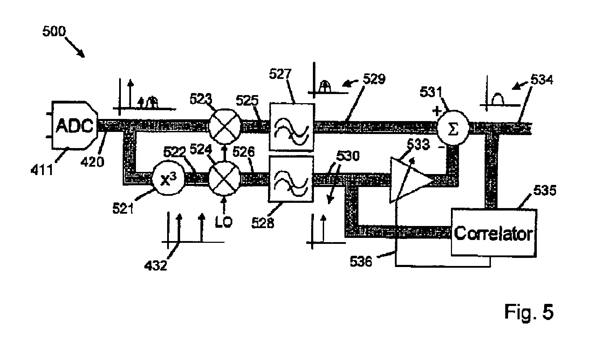

An exemplary embodiment of a digital signal processing apparatus 500 for performing the above described correction is illustrated in figure 5. In this embodiment, the ADC output signal 420 is multiplied by itself with a multiplier module 521, thereby creating a multiplied signal 522 comprising a harmonic product of the strong unwanted signal 432. In the exemplary embodiment shown, the multiplier module 521 is configured to multiply the ADC output signal 420 by itself twice to create a third harmonic product of the strong unwanted signal 432. Other multiplies can also be used for cancelling other harmonic components, although at the expense of additional hardware and power consumption. Both the multiplier output signal 522 and the ADC output signal 420 are mixed to baseband with respective mixer modules 523, 524, each of which is provided with a common local oscillator mixing signal LO. The resulting intermediate frequency signals 525, 526 are filtered by respective intermediate frequency filters 527,528. The filtered and mixed ADC output signal 529 from the first IF filter 527 is provided to a first, addition, input of a adder module 531, and the filtered and the mixed multiplied ADC output signal 530 is provided to a second, subtraction, input of the adder module 531. A gain, which may be positive or negative, can be applied to the signal 530 by means of an adjustable amplifier 533. The signal 530, with appropriate gain, is subtracted from the mixed multiplied ADC output signal 531 at the added module 531, providing an output signal 534 in which the third harmonic component is reduced or eliminated.

In order to ensure that the appropriate gain is applied to signal 530 so that the third harmonic component is correctly subtracted from signal 529, a correlator 535 can be provided. The correlator 535, the function of which may be provided by a multiplier, compares the output signal 534 with signal 530 and adjusts the gain of the amplifier 533 by means of a control signal 536 provided to the amplifier 533. The correlator 535 is configured to automatically adjust the gain of the amplifier 533 until there is a minimum (ideally zero) correlation between the output signal 534 and the signal 530 from the second IF filter 528. By checking correlation of both the real and imaginary components of the output signal 534 with signal 530, phase can also be automatically corrected for.

In principle, the correction loop provided by the correlator 535, amplifier 533 and subtractor 531 can be implemented for each channel received by the wideband receiver. However, if an initial check is performed to determine whether a particular wanted channel suffers from a harmonic component of a strong unwanted signal, the correction loop can be switched off if this is not the case. Since the levels of all signals in the band are known, the harmonics and intermodulation products of large signals can be calculated. It can be checked whether the wanted signals have any corresponding calculated products. Alternatively, the loop can be used for another wanted channel that may suffer from a harmonic component. The calculated coefficients can be fixed and the loop can be switched to receive another channel in order to calculate the coefficients for that specific channel. This can be alternated in time to keep all the coefficients up to date. Besides cancelling the harmonic products (from HD2 to HDx where x is determined by which order of the strong signal created in the cancelling loop), the above described method can also be used for compensation of intermodulation distortion products, which are generated by third order distortion similar to the 3rd order harmonic components.

Other embodiments are intentionally within the scope of the invention as defined by the appended claims.

## Claims

1. A method of reducing harmonic distortion in a digitised radiofrequency input signal (420), the method comprising:
multiplying the input signal (420) by itself to produce a product signal (522);
mixing the input signal (420) and the product signal (522) with a baseband frequency signal (LO) to produce first and second intermediate frequency signals (525,526; 529,530); and
subtracting a scaled version of the second intermediate frequency signal (526;530) from the first intermediate frequency signal (525;529) to produce an output signal (534).

2. The method of claim 1 wherein the second intermediate frequency signal (526;530) is scaled via an amplifier (533) having an adjustable gain.

3. The method of claim 1 or claim 2 wherein the first and second intermediate frequency signals (525,526) are filtered with respective filter modules (527,528).

4. The method of claim 2 or claim 3 comprising the steps of :
calculating a correlation between the output signal (534) and the product signal (530); and
adjusting the gain of the amplifier (533) until the correlation is minimised.

5. A digital signal processing apparatus (500) for reducing harmonic distortion in a digitised radiofrequency input signal (420), the apparatus comprising:
an analog to digital converter (411) configured to convert an input radiofrequency signal into a digitised signal (420);
a first mixer module (523) configured to mix the digitised signal (420) with a mixing signal (LO) to provide a first intermediate signal (525);
a signal multiplier module (521) configured to multiply the digitised signal (420) by itself to provide a product signal (522);
a second mixer module (524) configured to mix the product signal (522) with the mixing signal (LO) to provide a second intermediate signal (526);
first and second filter modules (527,528) configured to respectively receive the first and second intermediate frequency signals (525,526) and to provide respective first and second filtered intermediate frequency signals (529,530);
a scaling module (533) configured to scale the second filtered intermediate signal (530) to provide a scaled version of the second intermediate frequency signal (530); and
a subtractor module (531) configured to subtract the scaled version of the second intermediate signal (530) from the first filtered intermediate frequency signal (529) to provide an output signal (534).

6. The digital signal processing apparatus (500) of claim 5 wherein the scaling module is an amplifier (533) having an adjustable gain.

7. The digital signal processing apparatus (500) of claim 6 comprising a correlator module (535) configured to calculate a correlation between the output signal (534) and the product signal (530) and to provide a control signal (536) to the amplifier (533) to reduce the correlation.
